Europäisches Patentamt

European Patent Office

Office européen des brevets

(19)

(11) Veröffentlichungsnummer: **0 246 607**
**B1**

(12) **EUROPÄISCHE PATENTSCHRIFT**

(45) Veröffentlichungstag der Patentschrift:
25.07.90

(51) Int. Cl.⁵: **A47J 37/10, A47J 27/022**

(21) Anmeldenummer: **87107256.7**

(22) Anmeldetag: **19.05.87**

(54) Bratpfanne.

(30) Priorität: **22.05.86 CH 2064/86**

(43) Veröffentlichungstag der Anmeldung:
**25.11.87 Patentblatt 87/48**

(45) Bekanntmachung des Hinweises auf die Patenterteilung:
**25.07.90 Patentblatt 90/30**

(84) Benannte Vertragsstaaten:
**AT CH DE GR LI NL**

(56) Entgegenhaltungen:
**CH-A- 173 009**
**CH-A- 210 571**
**DE-A- 3 101 091**
**FR-A- 400 289**
**GB-A- 15 571**
**GB-A- 375 472**
**GB-A- 2 120 531**
**GB-A- 2 166 340**
**US-A- 1 707 532**
**US-A- 1 936 551**
**US-A- 2 515 617**
**US-A- 2 581 161**
**US-A- 3 747 509**

(73) Patentinhaber: **FISSLER GMBH, Im**
**Wörth 2 Postfach 12 23 20, D-6580 Idar-Oberstein 2(DE)**

(72) Erfinder: **Schawalder, Albert C., KEIL &**
**SCHAAFHAUSEN Ammelburgstrasse 34,**
**D-6000 Frankfurt am Main 1(DE)**

(74) Vertreter: **Keil, Rainer A., Dipl.-Phys. Dr. et al, KEIL &**
**SCHAAFHAUSEN Patentanwälte Eysseneckstrasse 31,**
**D-6000 Frankfurt am Main 1(DE)**

ACTORUM AG

**Beschreibung**

Die Erfindung bezieht sich auf eine Bratpfanne für Elektro- und/oder Gasherde mit einem Pfannenkörper mit einem an dessen Unterseite eine Standfläche und an dessen Oberseite eine Bratfläche bildenden, im wesentlichen kreisrunden Pfannenboden, wobei die Bratfläche wenigstens zwei Bereiche aufweist, welche bei Erhitzung auf dem Herd unterschiedliche Temperatur annehmen, wobei die im übrigen im wesentlichen ebene Standfläche eine Anzahl Vertiefungen aufweist und wobei die zwischen den Vertiefungen verbleibenden Standflächenteile wenigstens teilweise mit dem vertiefungsfreien Teilbereich der Standfläche fluchten.

Viele herkömmliche z.B. aus Stahl oder Aluminium bestehenden Bratpfannen haben einen gleichmäßigen Pfannenboden, so daß die Bratfläche auf dem Herd gleichmäßig erhitzt wird. Sollen jedoch in einer Bratpfanne beispielsweise Fleisch und gleichzeitig Zutaten, wie Zwiebeln u.dgl. zubereitet werden, besteht bei den genannten Bratpfannen mit gleichmäßigem Pfannenboden die Notwendigkeit, das leichtere Bratgut, nämlich die Zutaten vor einem Anbrennen zu schützen. Zu diesem Zweck muß die Bratpfanne vom Herd mehr oder weniger lang und häufig abgehoben oder seitlich verschoben werden. Auch kann die nachträgliche Zugabe oder die vorzeitige Entnahme des leichteren Bratgutes im Verhältnis zu dem schärfer zu bratenden Bratgut erforderlich sein. Zum Zweck der Vermeidung dieser Nachteile ist bereits eine Bratpfanne (DE-A 3 101 091) vorgeschlagen worden, welche einen Pfannenkörper mit einem an der Unterseite eine Standfläche und an der Oberseite eine Bratfläche bildenden Pfannenboden, mit einem den Pfannenboden umgebenden aufwärtsweisenden Pfannenrand, sowie mit mindestens einer innerhalb des Pfannenrandes gegenüber der Bratfläche erhöht und in Draufsicht außerhalb der Standfläche liegenden Ablagefläche aufweist, die über eine Stufe in die Bratfläche übergeht, wobei die Stufe nur einen Teil des Umfanges der Bratfläche einnimmt und die Ablagefläche in ihrer äußeren Breite den größten - in gleicher Richtung gemessenen - Durchmesser der Bratfläche nicht übersteigt. Aufgrund der gegenüber der normalen Bratfläche erhöhten Ablagefläche herrscht bei letzterer während des Bratvorganges eine niedrigere Temperatur, so daß das leichtere Bratgut, beispielsweise die Zutaten zu Fleisch u.dgl. dorthin geschoben werden können, um ein Verbrennen zu vermeiden. Auch kann die Ablagefläche niedrigerer Temperatur zum Warmhalten bereits fertig gebratenen Bratgutes verwendet werden.

Aus der US-A 3 747 509 ist eine Grillpfanne bekannt, dessen Bratfläche mittels Unterteilungsrippen in einer Anzahl von Bereichen unterteilt ist, die bei Erhitzung auf dem Herd unterschiedliche Temperaturen annehmen. Die Standfläche des Pfannenbodens wird von in verhältnismäßig großen Abständen voneinander angeordneten und einander überkreuzenden Aufstandsrippen gebildet, welches Rippennetzwerk praktisch den gesamten Pfannenboden überdeckt, um eine gleichmäßige Ausgangstemperaturverteilung für die Bratflächen zu schaffen. Unterschiedliche Temperaturen in einzelnen Bratflächenbereichen werden dadurch erreicht, daß die Bodenwandung unterschiedliche Höhe von der von den Aufstandsrippen gebildeten Aufstandsfläche haben. Bei dieser Pfanne ist es noch nichtmöglich, Bratgut von einem Temperaturbereich in einen anderen zu verschieben, da die entsprechenden Bratflächenbereiche nicht nur durch verhältnismäßig steile Stufen, sondern auch noch durch die erwähnten Unterteilungsrippen voneinander getrennt sind. Um eine möglichst niedrige Temperatur zu erzielen, ist in einem Teil der bekannten Pfanne der Bratflächenbereich sogar bis auf die Höhe des oberen Randes der Pfannenwandung angehoben und nicht mehr von dem Pfannenrand umgeben. In diesem Pfannenbodenbereich ist ferner die Bodenwandung auf ihrer Unterseite durch zusätzliche Verstärkungsrippen derart verstärkt, daß eine größere Materialmasse pro Flächeneinheit vorhanden und die Wärmeabstrahloberfläche vergrößert ist. Die Verstärkungsrippen enden jedoch bereits in erheblichem Abstand oberhalb der von den Aufstandsrippen gebildeten Aufstandsfläche, welche Aufstandsrippen in dem Pfannenbodenbereich niedriger Temperatur ausgespart sind. Der Fertigungsaufwand für eine solche Grillpfanne ist wegen der unterschiedlichen dicken Bodenbereiche erheblich.

Aus der US-A 2 515 617 ist eine Bratpfanne der gattungsgemäßen Art bekannt, bei welcher der Pfannenboden in das Pfanneninnere weisenden Unterteilungsstegen aufweist, so daß verschiedene voneinander getrennte Bratflächenbereiche gebildet sind. Jedem Bratflächenbereich ist eine einzige kreisrunde, großflächige Aussparung im mittleren Bereich der Standfläche des Pfannenbodens zugeordnet, weil in dem oberhalb der jeweiligen Aussparung befindlichen Bratflächenteilbereich eine erhöhte Temperatur herrschen soll. Durch die Gestaltung der Pfannenbodens ist die Herstellung einer solchen Bratpfanne verhältnismäßig aufwendig. Ferner kann das Bratgut nicht über die gesamte Bratfläche verschoben werden. Durch die stegartigen Vorsprünge des Pfannenbodens sind die zur Verfügung stehenden Bratflächenbereiche, die zudem noch in solche mit höherer und niedrigerer Temperatur zu unterteilen sind, verhältnismäßig klein, da der Gesamtdurchmesser des Pfannenbodens unter Berücksichtigung der zur Verfügung stehenden Heizquellen begrenzt ist. Durch die großflächigen Aussparungen ist der Pfannenboden bei der bekannten Bratpfanne verhältnismäßig instabil und die Standfestigkeit der Bratpfanne beeinträchtigt.

Hiervon ausgehend ist es Aufgabe der vorliegenden Erfindung, eine Bratpfanne der eingangs genannten Art vorzuschlagen, welche eine einfachere Handhabung des Bratgutes bei kostengünstiger Fertigung zuläßt.

Diese Aufgabe wird erfindungsgemäß im wesentlichen dadurch gelöst, daß die Bratfläche stufenlos, als eine im wesentlichen ebene Fläche ausgebildet ist, daß der Pfannenboden insgesamt aus einem Material von im wesentlichen gleicher Materialstärke besteht, daß die Anzahl Vertiefungen benachbart zueinander in einem Teilbereich der Standfläche vorgesehen sind und daß die Vertiefungen in einem an die Pfannenwandung angrenzenden Kreissegment der Standfläche vorgesehen sind.

Im Gegensatz zum Stand der Technik ist damit die Bratfläche trotz der Erzielung unterschiedlicher Temperaturbereiche über die gesamte Bratfläche stufenlos, so daß ein Verschieben von empfindlichem Bratgut über die gesamte Bratfläche auch in den Bereich niedrigerer Temperatur keine Schwierigkeiten bereitet. Dadurch, daß der Pfannenboden aus einem Material von im wesentlichen gleicher Materialstärke besteht, ist die Fertigung gegenüber herkömmlicher Bratpfannen, wie nach der US-A 2 515 617 wesentlich vereinfacht. Durch die Anordnung einer Anzahl von Vertiefungen in einem Teilbereich der Standfläche wird in diesem Bereich eine niedrigere Temperatur erzielt, wenn die Bratpfanne auf einem Elektroherd verwendet wird, und eine höhere Temperatur bei Verwendung auf einem Gasherd. Gleichzeitig wird die Stabilität des Pfannenbodens und Standfestigkeit der Bratpfanne sichergestellt. Dadurch, daß die Vertiefungen in einem an die Pfannenwandung angrenzenden Kreissegment der Standfläche vorgesehen sind, wird ohne die Notwendigkeit von Zwischenstegen ein definierter Bratflächenbereich festgelegt, in welchen das Bratgut, welches einer niedrigeren oder höheren Temperatur ausgesetzt werden soll, einfach verschoben werden kann. Der Bereich niedrigerer bzw. höherer Temperatur wird dadurch erzielt, daß in der ansonsten im wesentlichen ebenen Standfläche bereichsweise Vertiefungen, beispielsweise durch Einformen, Einfräsen o.dgl. freigehalten sind, in diesem Bodenbereich jedoch über die verbleibenden Standflächenteile, die mit der vertiefungsfreien Standfläche fluchten, nach wie vor beispielsweise von einer Elektroplatte Wärme aufgenommen wird. Der massiv ausgebildete Teilbereich des Pfannenbodens läßt bei Verwendung auf einen Gasherd in diesem Falle weniger Wärme zu dem Bratgut hindurch als der mit den Vertiefungen versehene, dem Gasfeuer eine größere Oberfläche darbietende Teilbereich des Pfannenbodens.

Die zwischen den Vertiefungen verbleibenden Standflächenteile können jeweils getrennte Flächenbereiche der Standfläche einnehmen. Andererseits können aber auch die Vertiefungen und/oder die zwischen den Vertiefungen verbleibenden Standflächenteile untereinander in Verbindung stehen.

Vorzugsweise sind die Vertiefungen nutartig ausgebildet und verlaufen vorzugsweise parallel. Ebenso können die zwischen den Vertiefungen verbleibenden Standflächenteile rippenartig ausgebildet und vorzugsweise parallel verlaufen.

Bei einer anderen Ausgestaltung der Erfindung sind die Vertiefungen sacklochartig ausgebildet und/oder die zwischen den Vertiefungen erbleibenden Standflächenteile noppenartig ausgebildet.

Zur Gewährleistung eines definierten Wärmeüberganges und einer guten Standfestigkeit der Bratpfanne bilden die zwischen den Vertiefungen verbleibenden Standflächenteile vorzugsweise im wesentlichen ebene Flächenbereiche, welche mit dem vertiefungsfreien Teilbereich der Standfläche fluchten.

In Ausgestaltung des Erfindungsgedankens kann es beispielsweise auch möglich sein, die Vertiefungen und/oder die zwischen den Vertiefungen verbleibenden Standflächenteile in Draufsicht im wesentlichen rund, quadratisch, rechteckig oder polygonal auszubilden.

Desgleichen dient es einer Vergleichmäßigung des Wärmeübergangs, wenn sich die nutartigen Vertiefungen und/oder die zwischen den Vertiefungen verbleibenden rippenartigen Standflächenteile gitterartig überkreuzen.

Als besonders zweckmäßig hat es sich bei Stahl- oder Aluminiumpfannen erwiesen, wenn die Vertiefungen eine Tiefe zwischen etwa 0,5 und 3 mm vorzugsweise von etwa 1 mm haben.

Das Verhältnis der von Vertiefungen eingenommenen Gesamtfläche zu der von den zwischen den Vertiefungen verbleibenden Standflächenteile eingenommenen Gesamtfläche in dem die Vertiefungen aufweisenden Teilbereich der Standfläche liegt vorzugsweise etwa zwischen 5:1 und 0,2:1, vorzugsweise bei etwa 3:1.

Je nachdem ob die Bratpfanne für Elektroherdplatte oder Gasherdfeuerung benutzt werden soll, kann der die Vertiefungen aufweisende Teilbereich der Standfläche etwa ein Viertel bis drei Viertel, vorzugsweise etwa ein Drittel oder zwei Drittel der gesamten Standfläche einnehmen, wobei die Bratpfanne, bei welcher der die Vertiefungen aufweisende Teilbereich etwa ein Drittel einnimmt, für Elektroherdplatte und die Bratpfanne, bei welcher der die Vertiefungen aufnehmende Teilbereich etwa zwei Drittel einnimmt, für Gasherdfeuer bestimmt ist.

Damit der Benutzer auch bei auf dem Herd stehender Bratpfanne die unterschiedlichen Temperaturzonen erkennt, weist die Bratfläche oberhalb des die Vertiefungen aufweisenden Teilbereichs der Standfläche und/oder nur oberhalb des Übergangs zwischen dem die Vertiefungen aufweisenden und dem vertiefungsfreien Teilbereich der Standfläche eine andere optisch sichtbare Oberflächenbeschaffenheit, insbesondere andere Farbe, andere Oberflächenstruktur oder andere Beschichtung, auf, als in dem übrigen Bereich bzw. den übrigen Bereichen der Bratfläche.

Eine günstige Handhabbarkeit des empfindlichen Bratgutes wird insbesondere dann erreicht, wenn der die Vertiefungen aufweisende Teilbereich der Standfläche in dem einem Pfannengriff entfernten, vorzugsweise gegenüberliegenden Abschnitt des Pfannenboden vorgesehen ist.

Ersichtlich eignen sich die zuvor und in den Ansprüchen für eine Bratpfanne wiedergegebenen erfindungsgemäß Maßnahmen auch für andere Brat- oder Kochgefäße, so daß der Begriff Bratpfanne nicht schutzbereichsbeschränkend auszulegen ist.

Weitere Ziele, Merkmale, Vorteile und Anwendungsmöglichkeiten der vorliegenden Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger sinnvoller Kombination den Gegenstand der vorliegenden Erfindung auch unabhängig von ihrer Zusammenfassung oder deren Rückbeziehung.

Es zeigen:

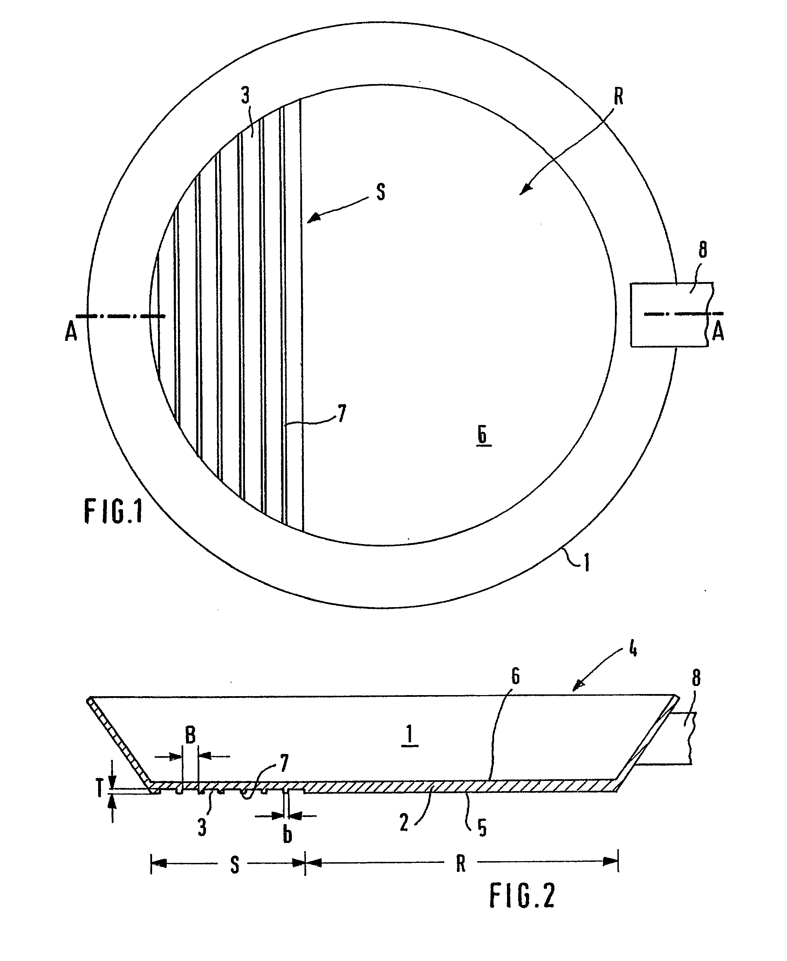

Fig. 1 in Draufsicht eine die Erfindung aufweisende Bratpfanne, und

Fig. 2 einen Querschnitt der Bratpfanne von Fig. 1 entlang der Schnittlinie A-A-

Die dargestellte Bratpfanne hat einen Pfannenkörper 4 und einen Pfannengriff 8. Der Pfannenkörper 4 ist im wesentlichen von einer umlaufenden schräg aufsteigenden Pfannenwandung 1 und einem im wesentlichen ebenen kreisrunden Pfannenboden 2 gebildet. Der Pfannenboden 2 bildet auf seiner Unterseite eine Standfläche 5 und auf seiner Oberseite eine vorzugsweise glatte und ebene, durchgehende Bratfläche 6. Der Pfannenboden 2 besteht aus einem metallenen Material von im wesentlichen gleicher Materialstärke. Jedoch sind in einem kreissegmentförmigen Teilbereich S der Standfläche 5, welcher dem Pfannengriff 8 aus Metall, Holz oder Kunststoff gegenüberliegt, nutförmige, in gleichmäßigem Abstand parallel zueinander verlaufende Vertiefungen 3 vorgesehen. Zwischen den Vertiefungen 3 verbleiben rippenförmige parallel zueinander verlaufende Standflächenteile 7, deren der Wärmequelle zugewandten Flächenbereiche mit dem vertiefungsfreien Teilbereich R der Standfläche 5 fluchten. Dadurch hat die Bratpfanne eine im wesentlichen ebene stufenlose Bratfläche 6 und eine über den gesamten Querschnitt des Pfannenbodens 2 reichende Standfläche 5, die jedoch in einem Teilbereich S von Vertiefungen 3 unterbrochen ist, ohne die Standfestigkeit zu beeinträchtigen. Beim Aufsetzen der Bratpfanne auf Elektroherdplatte stehen die Standflächenteile 7 zwischen den Vertiefungen 3 ebenso auf der Herdplatte auf wie der vertiefungsfreie Teilbereich R der Standfläche 5. In dem dargestellten Fall hat bei einem üblichen Pfannenbodendurchmesser von etwa 200 mm der die Vertiefungen 3 aufweisende kreissegmentförmige Teilbereich S eine maximale radiale Höhe von etwa 75 mm, die Breite b der rippenförmigen Standflächenteile 7 liegt bei etwa 1 mm, die Breite B der Vertiefungen 3 bei etwa 6 mm und die Tiefe der Vertiefungen 3 bei etwa 1 mm, während die Materialstärke des Pfannenbodens 2, d.h. der Abstand von Standfläche 5 und Bratfläche 6, etwa 4 mm beträgt.

Bezugszeichenliste:

1 Pfannenwandung
2 Pfannenboden
3 Vertiefungen
4 Pfannenkörper
5 Standfläche
6 Bratfläche
7 Standflächenteile
8 Pfannengriff
B Breite
b Breite
R Teilbereich
S Teilbereich
T Tiefe

.

**Patentansprüche**

1. Bratpfanne für Elektro- und/oder Gasherde mit einem Pfannenkörper (4) mit einem an dessen Unterseite eine Standfläche (5) und an dessen Oberseite eine Bratfläche (6) bildenden im wesentlichen kreisrunden Pfannenboden (2), wobei die Bratfläche (6) wenigstens zwei Bereiche aufweist, welche bei Erhitzung auf dem Herd unterschiedliche Temperatur annehmen, wobei die im übrigen im wesentlichen ebene Standfläche (5) eine Anzahl Vertiefungen (3) aufweist und wobei die zwischen den Vertiefungen (3) verbleibenden Standflächenteile (7) wenigstens teilweise mit dem vertiefungsfreien Teilbereich (R) der Standfläche (5) fluchten, dadurch gekennzeichnet, daß die gesamte Bratfläche (6) stufenlos, als eine im wesentlichen ebene Fläche ausgebildet ist, daß der Pfannenboden (2) insgesamt aus einem Material von im wesentlichen gleicher Materialstärke besteht, daß die Anzahl Vertiefungen (3) benachbart zueinander in einem Teilbereich (S) der Standfläche (5) vorgesehen sind und daß die Vertiefungen (3) in einem an die Pfannenwandung (1) angrenzenden Kreissegment der Standfläche (5) vorgesehen sind.

2. Bratpfanne nach Anspruch 1, dadurch gekennzeichnet, daß die zwischen den Vertiefungen (3) verbleibenden Standflächenteile (7) jeweils getrennte Flächenbereiche der Standfläche (5) einnehmen.

3. Bratpfanne nach Anspruch 1 oder 2, dadurch gekennzeichnet, daß die Vertiefungen (3) nutartig ausgebildet sind und vorzugsweise parallel verlaufen und/oder daß die zwischen den Vertiefungen (3) verbleibenden Standflächenteile (7) rippenartig ausgebildet sind und vorzugsweise parallel verlaufen.

4. Bratpfanne nach einem der Ansprüche 1 bis 3, dadurch gekennzeichnet, daß die Vertiefungen (3) sacklochartig ausgebildet sind und/oder daß die zwischen den Vertiefungen (3) verbleibenden Standflächenteile (7) noppenartig ausgebildet sind.

5. Bratpfanne nach einem der Ansprüche 1 bis 4, dadurch gekennzeichnet, daß die zwischen den Vertiefungen (3) verbleibenden Standflächenteile (7) im wesentlichen ebene Flächenteile bilden, welche mit dem vertiefungsfreien Teilbereich (R) der Standfläche (5) fluchten.

6. Bratpfanne nach einem der Ansprüche 1 bis 5, dadurch gekennzeichnet, daß die Vertiefungen (3) und/oder die zwischen den Vertiefungen (3) verbleibenden Standflächenteile (7) in Draufsicht im wesentlichen rund, quadratisch, rechteckig oder polygonal ausgebildet sind.

7. Bratpfanne nach einem der Ansprüche 3 bis 6, dadurch gekennzeichnet, daß sich die nutartigen Vertiefungen (3) und/oder die zwischen den Vertiefungen (3) verbleibenden rippenartigen Standflächenteile (7) gitterartig überkreuzen.

8. Bratpfanne nach einem der Ansprüche 1 bis 7, dadurch gekennzeichnet, daß die Vertiefungen (3) eine Tiefe zwischen etwa 0,5 und 3 mm, vorzugsweise von etwa 1 mm haben.

9. Bratpfanne nach einem der Ansprüche 1 bis 8, dadurch gekennzeichnet, daß das Verhältnis der von den Vertiefungen (3) eingenommenen Gesamtfläche zu der von den zwischen den Vertiefungen (3) verbleibenden Standflächenteile (7) eingenommenen Gesamtfläche in dem die Vertiefungen (3) aufweisenden Teilbereich (S) der Standfläche (5) etwa zwischen 5:1 und 0,2:1, vorzugsweise bei etwa 3:1 liegt.

10. Bratpfanne nach einem der Ansprüche 1 bis 9, dadurch gekennzeichnet, daß der die Vertiefungen (3) aufweisende Teilbereich (S) der Standfläche (5) etwa ein Viertel bis drei Viertel, vorzugsweise etwa ein Drittel oder zwei Drittel, der gesamten Standfläche (5) einnimmt.

11. Bratpfanne nach einem der Ansprüche 1 bis 10, dadurch gekennzeichnet, daß die Bratfläche (6) oberhalb des die Vertiefungen (3) aufweisenden Teilbereichs (S) der Standfläche (5) und/oder nur oberhalb des Übergangs zwischen dem die Vertiefungen (3) aufweisenden (S) und dem vertiefungsfreien Teilbereich (R) der Standfläche (5) eine andere optisch sichtbare Oberflächenbeschaffenheit, insbesondere andere Farbe, andere Oberflächenstruktur oder andere Beschichtung, aufweist, als in dem übrigen Bereich bzw. den übrigen Bereichen der Bratfläche (6).

12. Bratpfanne nach einem der Ansprüche 1 bis 11, dadurch gekennzeichnet, daß der die Vertiefungen (3) aufweisende Teilbereich (S) der Standfläche (5) in dem einen Pfannengriff (8) entfernten, vorzugsweise gegenüberliegenden Abschnitt des Pfannenbodens (2) vorgesehen ist.

**Revendications**

1. Poêle à frire pour des cuisinières électriques et/ou à gaz, comprenant un corps de poêle (4) avec un fond de poêle (2) essentiellement circulaire dont la face inférieure forme une surface d'appui (5) et la face supérieure une surface de cuisson (6), la surface de cuisson (6) présentant au moins deux zones adoptant des températures différentes lors du chauffage sur la cuisinière, la surface d'appui (5) par ailleurs essentiellement plane présentant une pluralité de creux (3), et les parties (7) de la surface d'appui subsistant entre les creux (3) se trouvant au moins partiellement de niveau avec la zone partielle (R), exempte de creux, de la surface d'appui (5), caractérisée par le fait que la surface de cuisson (6) dans son ensemble est réalisée sans gradin, sous la forme d'une surface essentiellement plane, que le fond (2) de la poêle est constitué dans son ensemble par un matériau d'une épaisseur essentiellement uniforme, que les creux (3) sont prévus voisins les uns des autres dans une zone partielle (S) de la surface d'appui (5) et que les creux (3) sont prévus dans un segment de cercle de la surface d'appui (5) contigu de la paroi (1) de la poêle.

2. Poêle à frire suivant revendication 1, caractérisée par le fait que les parties (7) de la surface d'appui subsistant entre les creux (3) occupent chacune des zones de surface séparées de la surface d'appui (5).

3. Poêle à frire suivant revendication 1 ou 2, caractérisée par le fait que les creux (3) sont réalisés à la manière de rainures et s'étendent de préférence parallèlement et/ou que les parties (7) de la surface d'appui subsistant entre les creux (3) sont réalisées à la manière de nervures et s'étendent de préférence parallèlement.

4. Poêle à frire suivant l'une des revendicatons 1 à 3, caractérisée par le fait que les creux (3) sont réalisés à la manière de trous borgnes et/ou que les parties (7) de la surface d'appui subsistant entre les creux (3) sont réalisés à la manière de bossages.

5. Poêle à frire suivant l'une des revendications 1 à 4, caractérisée par le fait que les parties (7) de la surface d'appui subsistant entre les creux (3) constituent des parties de surface essentiellement planes qui se trouvent au niveau de la zone partielle (R) exempte de creux de la surface d'appui (5).

6. Poêle à frire suivant l'une des revendications 1 à 5, carartérisée par le fait que les creux (3) et/ou les parties (7) de la surface d'appui subsistant entre les creux (3) présentent en plan une forme essentiellement ronde, carrée, rectangulaire ou polygonale.

7. Poêle à frire suivant l'une des revendications 3 à 6, caractérisée par le fait que les creux (3) en forme de rainures et/ou les parties (7) en forme de nervures de la surface d'appui, subsistant entre les creux (3), s'entrecroisent à la manière d'un grillage.

8. Poêle à frire suivant l'une des revendications 1 à 7, caractérisée par le fait que les creux (3) présentent une profondeur comprise entre environ 0,5 et 3 mm, de préférence une profondeur d'environ 1 mm.

9. Poêle à frire suivant l'une des revendications 1 à 8, caractérisée par le fait que le rapport de la surface totale occupée par les creux (3) par la surface totale occupée par les parties (7) de la surface d'appui subsistant entre les creux (3), dans la zone partielle (S) de la surface d'appui (5) présentant les creux (3), est compris entre environ 5:1 et 0,2:1 et est de préférence de l'ordre de 3:1.

10. Poêle à frire suivant l'une des revendications 1 à 9, caractérisée par le fait que la zone partielle (S) de la surface d'appui (5) présentant les creux (3) occupe environ un quart à trois quarts, de préférence environ un tiers ou deux tiers de la surface d'appui (5) totale.

11. Poêle à frire suivant l'une des revendications 1 à 10, caractérisée par le fait que la surface de cuisson (6) présente, au-dessus de la zone partielle (S) de la surface d'appui (5) présentant les creux (3) et/ou uniquement au-dessus de la zone de raccordement entre la zone partielle (S) de la surface d'appui (5) présentant les creux (3) et la zone partielle (R) exempte de creux de la surface d'appui (5), un état de surface, en particulier une couleur, une structure superficielle ou un revêtement, qui diffère de façon optiquement visible de celui dans la zone restante ou dans les zones restantes de la surface de cuisson (6).

12. Poêle à frire suivant l'une des revendications 1 à 11, caractérisée par le fait que la zone partielle (S) de la surface d'appui (5) présentant les creux (3) est prévue dans la partie du fond de poêle (2) éloignée, de préférence située à l'opposé, d'une poignée de poêle (8).

**Claims**

1. Frying pan for electric and/or gas cookers, having a pan body (4) with an essentially circular pan base (2) forming a standing surface (6) on the underside of the said pan body (4) and a frying surfac (6) on the upper side of the said pan body (4), the frying surface (6) having at least two regions which take on various temperatures when heated on the cooker, the otherwise essentially flat planding surface (6) having a number of recesses (3), and the standing surface parts (7) remaining between the recesses (3) being in alignment at least partially with the partial region (R) of the standing surface (6) which is without recesses, characterised in that the entire frying surface (6) is formed continuously as an essentially flat surface, and in that the pan base (2) consists totally of a material of essentially the same thickness, and in that the number of recesses (3) are provided adjacent to each other in a partial region (6) of the standing surface (6), and in that the recesses (3) are provided in a segment of the circle of the standing surface (5) which borders the pan wall (3).

2. Frying pan according to claim 1, characterised in that the standing surface aprts (7) remaining between the recesses (3) occupy separate surface regions of the standing surface (6).

3. Frying pan according to claim 1 or 2, characterised in that the recesses (3) are formed in the manner of grooves and extend preferably parallel, and/or in that the standing surface parts (7) remaining between the recesses (3) are formed in the manner of ribs and extend preforably parallel.

4. Frying pan according to one of claims 1 to 3, characterised in taht the recesses (3) are formed in the manner of blind holes, and/or in that the standing surface parts (7) remaining between the recesses (3) are formed in the manner of knobs.

5. Frying pan according to one of claims 1 to 4, characterised in that the standing surface parts (7) remaining between the recesses (3) form essentially flat partial surfaces which align with the partial region (R) of the standing surface (5, which is without recesses.

6. Frying pan according to one of claims 1 to 5, characterised in that the recesses (3) and/or the standing surface parts (7) remaining between the recesses (3) are formed, as seen from above, as essentially round, square, rectangular or polygonal.

7. Frying pan according to one of claims 3 to 6, characterised in that the groove-like recesses (3) and/or the rib-like standing surface parts (7) remaining between the recesses (3) cross over in the manner of a grid.

8. Frying pan according to one of claims 1 to 7, characterised in that the recesses (3) have a depth of between approximately 0.5 and 3 mm, preferably approximately 1 mm.

9. Frying pan according to one of claims 1 to 8, characterised in that the ratio between the entire surface occupied by the recesses (3) and the entire surface occupied by the standing surface parts (7) remaining between the recesses (3) in the partial region (S) of the standing surface (5) which has the recesses (3), is approximately between 5:1 and 0.2:1, preferably at approximately 3:1.

10. Frying pan according to one of claims 1 to 9, characterised in that the partial region (S) of the standing surface (5) which has the recesses (3) occupies from approximately a quarter to three quarters, preferably a third or two thirds, of the entire standing surface (5).

11. Frying pan according to one of claims 1 to 10, characterised in taht the fryin gsurface (6), has, above the partial region (S) of the standing surface (5) which has the recesses (3) and/or only above the transition between the partiel region (S) of the standing surface (5) which has the recesses (3) and the partial region (S) of the standing surface (5) without recesses (3), another surface quality visible to the cye, in particular colour, surface structure or coating which is other than in the rest of the region or regions of the frying surface (6).

12. Frying pan according to one of claims 1 to 11, characterised in that the partial region (S) of the standing surface (5) which has the recesses (3) is provided in the section of the pan base (2) away from a pan handle (R), preferably lying opposite it.

FIG.1

FIG.2